(19) Europäisches Patentamt

European Patent Office

Office européen des brevets

(11) **EP 4 617 044 A1**

(12) **EUROPEAN PATENT APPLICATION**

(43) Date of publication:
**17.09.2025 Bulletin 2025/38**

(21) Application number: **25162648.7**

(22) Date of filing: **10.03.2025**

(51) International Patent Classification (IPC):
**B29C 70/02** $^{(2006.01)}$ **B29C 70/66** $^{(2006.01)}$

(52) Cooperative Patent Classification (CPC):
**B29C 70/66; B29C 67/02;** B29L 2031/737

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.03.2024 IT 202400005671**

(71) Applicant: **Alia Mentis S.r.l.**
**31050 Vedelago TV (IT)**

(72) Inventors:
- **Paronetto, Giuseppe**
  **31050 Vedelago (TV) (IT)**
- **Tessaro, Luca**
  **31050 Vedelago (TV) (IT)**

(74) Representative: **Citron, Massimiliano**
**Studio CB**
**Via I° Maggio, 6**
**31020 San Fior (TV) (IT)**

(54) **HOT-MOLDING METHOD**

(57) A method is described for producing a solid object (10) having a volume with an outermost surface, the object being constituted of a powdered material which was hot-molded and solidified in a mold (50), wherein in the volume of the object channels (22, 24) are created which extend from the inside of the object up to opening up on said outermost surface.

Fig. 2

EP 4 617 044 A1

**Description**

The invention regards a method for producing a solid core by hot molding and solidification of a powdered material, the core being preferably intended for hot molding of solid compound objects which internally have such a core and externally a carbon shell all around. The invention also relates to a core as produced by the method.

A powdered material for producing the internal core of carbon compound objects, taken here as an example, is known from EP 2 697 028. The material is hot-molded to produce the core, which is then laminated externally with layers of carbon. By heating the assembly [core+carbon] in the mold, the carbon polymerizes and the compound object is obtained. Since the residual air during curing can create intralaminar detachments between the core and the carbon layers, or even inside the core with actual cracks, before polymerization and after lamination the assembly is set under vacuum in an autoclave to extract residual air trapped between the core and the carbon layers.

This problem is insidious, because the air expands during curing and tends to infiltrate the core. Furthermore, the air that has expanded during the curing cycle returns to its original volume after the molded object is removed from the mold, and is not visible. However, after a first cycle at high temperature, e.g. during the painting, the air reincreases in volume and makes its way inside the molded object creating cracks or a blister between the core and the carbon (the so-called *blistering*).

The main object of the invention is to improve this state of the art.

The following definitions are used below:

*compound object* means a piece made by hot-molding and consisting of a solid internal *core* and a rigid external layer, preferably in polymerized carbon, which envelops the *core* all around (i.e. completely envelops the outermost surface of the core);
*object* means a solid piece made by hot-molding and subsequent solidification of a powdered material;
*core* means the aforementioned *object* when used to constitute the internal core of the *compound object;*
*material* means a particulate or powdered material suitable for hot-molding the object.

Another object of the invention is to propose a different production method of an object or core.

Another object of the invention is to propose a molding method that eliminates or at least mitigates the problems described above.

Another object of the invention is to propose a solid object or core produced from a powdered material that eliminates or at least mitigates the problems described above.

A method is then proposed for producing a solid object having an outermost surface, the object being made of a powdered material hot-molded and solidified in a mold, wherein in the volume of the object channels are created which extend from the inside of the object up to opening up on said outermost surface.

In the production of a compound object, given the impossibility of extracting all the air trapped in the [core + outer layer] assembly, the solution is to have it absorbed by the core and let it reside inside the core itself.

Said channels are used to store residual air present inside or around the object. If the object is wrapped in an outermost (e.g. carbon) layer, and in particular if the object constitutes the internal core of the compound object, air can penetrate the object during its stay in the mold or the useful life of the object. For example, the air infiltrated into the channels will remain there also in the subsequent molding or thermal stress phases, namely the channels also act as a buffer tank where the air can re-expand without deforming the object or the outermost layer. In particular, such outermost layer is a carbon shell, and the channels act as a buffer for the air during and after the forming and cross-linking of the carbon.

Note that the formula described in EP 2 697 028 does not allow obtaining the above channels.

In general, the channels may be dead-end (blind) channels or may pass through the object from side to side.

In a variant, to maximize the air storage effect, said channels are made so as to join two outlets thereof on said outermost surface which are placed at diametrically opposite points of the object.

In a variant, said channels are made so as to join two outlets on said outermost surface, to maximize the air storage effect.

In a variant, the object has a thickness and said channels pass through the thickness of the object. However, in certain applications, dead-end channels are also sufficient.

In one embodiment of the method, the channels are created after the object has been molded.

In a variant, the channels are made by mechanically puncturing or piercing said outermost surface after the object has been molded, preferably by penetrating the object with needles, via a laser, or by a water jet or compressed air.

In one embodiment of the method, the channels are created during hot-molding of the object.

In a variant, said material is molded inside a mold cavity having a surface from which needles or spines protrude. The material is deposited in the cavity so as to incorporate the needles or spines. Once molding and solidification are complete, and the object is removed from the mold, the object will have cavities in its volume corresponding in negative to the volume of the needles or spines.

In a variant, before hot-molding, the particles of the material are mixed with a resin, in particular particles of the material are coated with a resin. The resin separates the particles from each other and forms a sort of molasses that will then be hot-molded to create the object. Once molded, the mixture of resin and particles tends to create a spongy structure with alveoli, a sort of "Swiss cheese". When solid, the structure of the object will be like that of a sponge: most of the particles are linked together by filaments or bridges of solidified resin that extend into empty spaces between the particles. Then the filaments or bridges of solidified resin inside the object form empty channels between the particles, and statistically there will also be channels that reach the outermost surface of the object.

To achieve this effect there is a balance to be respected. If there is too little resin, the resin does not work because it becomes irrelevant in the volume of the object. If there is too much resin, the resin becomes excessively heavy and thickens instead of remaining uniformly distributed throughout the volume of the object. And like any heated material that then cools, too much resin creates shrinkage, i.e. deformations. Then, an appropriate weight % of resin should be added to the material, ranging from 5% to 100%. For example, for every 100 g of material, 5 to 100 g of resin can be added.

As a fast and efficient way, which involves the entire volume of the material, the resin is preferably added to the material by spraying it onto the material.

The resin is preferably an "inorganic" resin, such as an epoxy resin, or a thermoplastic resin (such as PVC) or an acrylic or vinyl or thermosetting resin.

The following additional variations apply to all of the above-mentioned embodiments.

In general, the diameter, depth and number of channels may vary, e.g. based on the density of the object, its thickness or the estimated residual quantity of air to be neutralized.

In particular, the object is obtained by hot-molding of - and is made up only of - powdered material or material in the form of microspheres or particles, in particular the powdered material comprises - or consists of - expanded particles and non-expanded particles, the particles being made of plastic material, of closed shape, hollow and filled with gas.

Plastic microspheres filled with gas may be used as particles for the object. In particular, the powder material to be molded is preferably composed of $10 \div 70$ % of expanded microspheres and $90 \div 30$% of non-expanded microspheres by weight, the microspheres being made of plastic material, closed shape, hollow and filled with gas. These values guarantee advantageous performance and weight suitable for the applications, in particular excellent results of impact absorption and lightness.

The expanded microspheres are essential to the invention, and act as a binder or filler for the other non-expanded particles. In fact, the expanded microspheres are the filler and act as a binder preventing the other expandable microspheres (not yet expanded), which are heavier, from falling by gravity to the bottom of the mold and thickening. Instead, the expanded microspheres keep the expanding microspheres suspended uniformly throughout the material. This is why the presence of expanded and non-expanded microspheres guarantees the homogeneity of the density of the entire object, ensuring uniformity of mechanical performance.

The microspheres are generally spherical in shape and very small ($10 \div 40$ $\mu$m in diameter). However, note that their size is not essential.

Preferably 1 to $10^5$ holes or channels per $dm^2$ are made in the object, more preferably 1 to $10^3$ per $dm^2$ so as not to weaken the object. Experimentally these values have given the best results.

Too large a channel in the object can create surface defects in the compound object. For example, the carbon laminated on the core may collapse inside a channel forming a dip, or the channel may transform into a well for the resin that impregnates the carbon, depleting the latter of resin.

Experimentally, an optimal relationship was found:

called S the thickness of the outer layer or shell, in particular the thickness of impregnated carbon fiber, and
called W the maximum width or diameter of each channel,
preferably it should be

$$W <= 5*S,$$

more preferably

$$W <= 3*S.$$

For example, a good compromise is achieved with channels having a maximum width or diameter of 0.01 mm to 5 mm.

In one embodiment the object, core or compound object is blade-shaped or fin-shaped.

In one embodiment the compound object is a wing or a propeller or a propeller blade, e.g. of a vehicle or a drone.

The problem of *blistering* is more accentuated when the object is thinner (e.g. with thickness <= 3 mm), because the thinner the object, the less its volume is able to absorb or tolerate the residual air. In other words, if the object has a large volume, the air percentage-wise does less damage. If a bubble forms, it constitutes a serious defect on small thicknesses or thicknesses comparable to the bubble.

Then in a preferred embodiment, where the advantages of the method are greater, the object has a thickness ranging from 1 to 10 mm, preferably from 2 to 7 mm, more preferably 3 mm.

The method preferably envisages

- enclosing said molded object inside a mold cavity as solid core of a compound object, the outermost surface of the object being completely enveloped in a carbon lamination;
- heating the core and the lamination to

  make the core expand towards the cavity,
  polymerize the carbon and join it to the core,

- extracting the compound object thus molded from the mold.

Another aspect of the invention is a hot-molding method for producing a compound object consisting of a solid inner core and an outer layer, e.g. made of carbon, which envelops the entire core, with the steps of

- enclosing a solid core completely wrapped in carbon lamination inside a mold cavity;
- heating the core and the carbon layer to

  make the core expand towards the cavity,
  polymerizing the carbon and join it to the core,

- and extracting the compound object thus molded from the mold,

wherein said core is the object provided with the aforementioned internal channels.

Another aspect of the invention is an object as produced by the hot-molding method.

In particular, the object has an outermost surface, and is constituted of a powdered material hot-molded and solidified in a mold, wherein
the volume of the object comprises channels that extend from the inside of the object up to opening on the outermost surface of the object.

The object as produced by the hot-molding method shares all the variants cited for the method.

Another aspect of the invention is a compound object produced by hot molding. In particular, the compound object comprises

  said solid internal core obtained by hot-molding said material, and
  an outer layer, e.g. made of carbon, which covers the entire core and is polymerized after hot-molding in a mold together with the core,
  wherein the core is provided with the aforementioned internal channels.

The compound object shares all the variants cited for the method.

The cross-section of one or each channel may have different shapes, e.g. circular, oval, square, rectangular or polygonal in general.

The various channels may have different cross-sections and/or depths and/or developments, not necessarily all equal.

The channels may also be produced by combining the above techniques.

The advantages of the invention will be made even clearer by the following description of a preferred method, wherein

- Fig. 1 shows a step of a method;
- Fig. 2 shows a step of a second method;
- Fig. 3 shows a step of a third method.

To avoid crowding the drawings, not all identical elements are numbered.

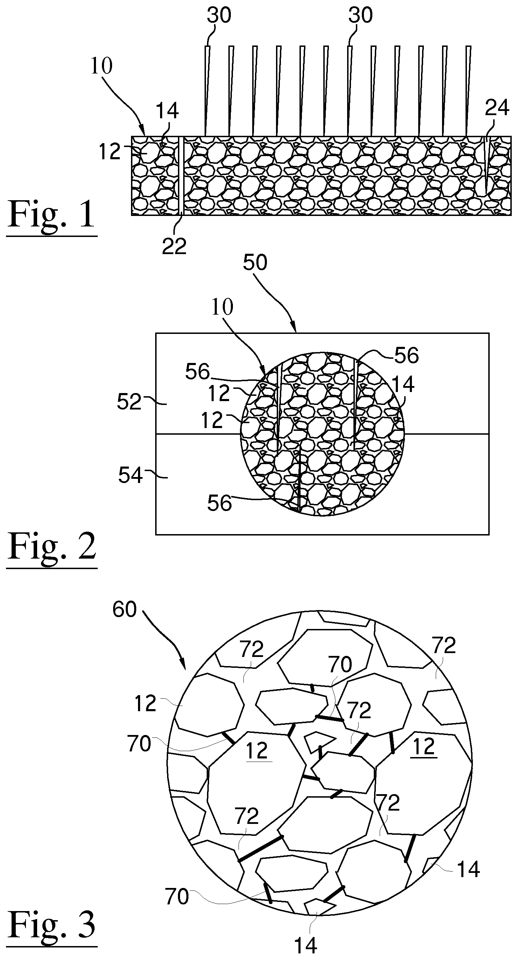

Fig. 1 schematically shows a solid object 10 formed by the solidification of powdered material. In particular, the object 10 comprises expanded particles 12 and unexpanded particles 14 and is (has been) produced by hot-molding.

After molding, channels 20 are created in the solid volume of the object 10 by the mechanical action of needles 30 which perforate or pierce the volume of the object 10. The channels 20 thus obtained may be channels 22 which pass through the thickness of the object 10 or dead-end channels 24.

Number and density of the channels 22, 24 are those indicated previously.

The channels 22, 24 - as already explained - ensure that residual air inside the object 10, or in proximity of its external surface when it is embedded into something else, does not deform the object 10 itself or the mating interface on its external surface.

The channels 20 in the volume of the object 10 may also be created during the molding of the object 10. A first way is shown in fig. 2.

A mold 50 is composed of two halves 52, 54 which delimit a mold cavity in which particulate material has been deposited in the form of a paste, in particular having a composition like that of fig. 1.

Needles 56 protrude from the surface of the mold cavities of the halves 52, 54 towards the center of the cavities themselves. The number and position of the needles 56 in the figure is for illustrative purposes only. Once molding is complete, the material inside the mold cavity will have solidified, copying both the shape of the mold cavity and copying in negative that of the needles 56. Then, after extraction from the mold 50, channels such as the channels 20 will already be present in the volume of the object 10.

A second way to make the channels 20 in the volume of the object 10 during the molding of the object 10 is described below with reference to fig. 3, which shows an enlarged cross-section of an object 60 molded with the particulate material of the previous variants.

Before being put into the mold, the particles 12, 14 of the material are sprayed with a synthetic resin to form a paste which is placed into a mold 50 (which preferably is devoid of the needles 56).

During heating in the mold, the resin polymerizes and the particles expand. Once cooked, the particles 12, 14 are immersed in a spongy matrix of solid resin, represented in the drawing by rigid bridges or filaments 70. The rigid bridges or filaments 70 develop inside the volume of the object 60 between alveoli or empty spaces 72 and stably connect the particles 12, 14 to each other.

The statistical distribution of the alveoli 72 and the rigid bridges or filaments 70 in space is such as to form a certain number of channels which extend from the inside of the volume of the object 60 up to reaching the outermost surface of the object 60. Such channels then have the same effect as the channels 20.

The resin is preferably an "inorganic" resin, such as an epoxy, or thermoplastic (such as PVC) or acrylic or vinyl or thermoset resin.

## Claims

1. Method for producing a solid object having a volume with an outermost surface,

   the object being constituted of a powdered material which was hot-molded and solidified in a mold,
   wherein in the volume of the object channels are created which extend from the inside of the object up to opening up on said outermost surface.

2. The method of claim 1, wherein the channels are blind channels or pass through the object from side to side.

3. Method according to any preceding claim, wherein the channels are created after the object has been molded.

4. The method of claim 3, wherein the channels are made by mechanically poking or piercing said outermost surface after the object has been molded.

5. Method according to any preceding claim, wherein channels are created during hot-molding of the object.

6. Method according to claim 5, wherein particles of the material are mixed with a resin before hot molding the object, adding to the material 5% to 100% by weight of resin.

7. Method according to any preceding claim, wherein

   - said molded object is enclosed inside a mold cavity as a solid core of a compound object, the outermost surface of the object being completely surrounded by a carbon lamination;

   - the core and the lamination are heated to

     expand the core towards the cavity,
     curing the carbon and join it to the core,

   - the compound object thus molded is extracted from the mold.

8. Method according to claim 7, wherein

   called S the thickness of the lamination,
   called W the maximum width or diameter of each channel,
   it holds that W <= 5*S or W <= 3*S.

9. Method according to any preceding claim, wherein the channels have a maximum width or diameter of 0.01 mm to 5 mm.

10. Method according to any preceding claim, wherein gas-filled plastic microspheres are used as particles for the material, the material being composed by weight of 10÷70% of expanded microspheres and 90÷30% of non-expanded microspheres.

Fig. 1

Fig. 2

Fig. 3

Europäisches
Patentamt

European
Patent Office

Office européen
des brevets

## EUROPEAN SEARCH REPORT

**Application Number**

EP 25 16 2648

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 383 608 B1 (BURKETT WILLIAM [US] ET AL) 7 May 2002 (2002-05-07) | 1-6,9 | INV.<br>B29C70/02 |
| A | * column 1, lines 35-45 *<br>* column 23, lines 24-44; figures *<br>* column 7, lines 17-23 * | 10 | B29C70/66 |
| | ----- | | |
| Y | JP H04 332612 A (OKURA INDUSTRIAL CO LTD; SUMITOMO CHEMICAL CO) 19 November 1992 (1992-11-19) | 1-6,9 | |
| A | * paragraph [0017] * | 7,8,10 | |
| | ----- | | |

| TECHNICAL FIELDS SEARCHED (IPC) |
|---|
| B29C |

The present search report has been drawn up for all claims

| Place of search | Date of completion of the search | Examiner |
|---|---|---|
| The Hague | 9 July 2025 | Van Wallene, Allard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 2648

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2025

| Patent document cited in search report | Publication date | Patent family member(s) | Publication date |
|---|---|---|---|
| US 6383608 B1 | 07-05-2002 | NONE | |
| JP H04332612 A | 19-11-1992 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2697028 A